## Europäisches Patentamt

**European Patent Office**

**Office européen des brevets**

(11) Publication number: **0 168 162**
**B1**

(12) **EUROPEAN PATENT SPECIFICATION**

(45) Date of publication of patent specification: **24.05.89**

(21) Application number: **85304022.8**

(22) Date of filing: **06.06.85**

(51) Int. Cl.⁴: **F 16 J 15/32**

(54) Mechanical sprung seal.

(30) Priority: **06.06.84 US 617621**

(43) Date of publication of application:
**15.01.86 Bulletin 86/03**

(45) Publication of the grant of the patent:
**24.05.89 Bulletin 89/21**

(84) Designated Contracting States:
**BE DE FR GB IT NL**

(56) References cited:
**DE-A-2 126 827**
**FR-A-1 411 604**
**FR-A-2 247 934**
**FR-A-2 354 491**
**US-A-4 133 542**

(73) Proprietor: **Janian, Robert**
**3845 Ballina Canyon Road**
**Encino California 91436 (US)**

(72) Inventor: **Janian, Robert**
**3845 Ballina Canyon Road**
**Encino California 91436 (US)**

(74) Representative: **Smith, Philip Antony et al**
**REDDIE & GROSE 16 Theobalds Road**
**London WC1X 8PL (GB)**

Courier Press, Leamington Spa, England.

# Description

This invention relates to mechanical sprung seals of the type in which a deformable seal element, typically of synthetic material, is spring loaded by an internal metal spring element, and is particularly directed to mechanical sprung seals of the above type of simple cross-sectional shape and having good resiliency, and wherein the spring element is readily inserted and locked into the seal element.

Sprung seals in a wide range of sizes are increasingly being used for a range of critical applications as static and dynamic sealing elements. They are far superior to O-rings where pressure and temperature requirements are substantial, because they provide long wear, low friction characteristics when interposed between opposing surfaces, and are resistant to the high temperature levels and pressures that may be encountered.

The sprung seals are based upon the concept of using an outer cover or jacket of stable high temperature resistant resin, such as Nylon or Teflon, which contacts the opposing surfaces to be sealed, and incorporates, in a cavity in the jacket, an elongated spring element, typically of metal. Although such sealing materials are inert, slippery and withstand wear, they have little shape memory. The metal spring compensates for this lack of shape memory and resiliency of the jacket materials by urging the sides of the cover outwardly against the facing surfaces.

A number of different configurations of sprung seals are known, as for example my prior patent US 4,133,542, on a configuration of, and method for making, a sprung seal. In this structure the spring has a base that is circular in form, for insertion into a mating concavity in the jacket. It is superior in a number of respects to prior U-shaped sprung seal configurations, because such U-shaped elements have sharp corners creating stress points when the sides are compressed. Also, tips on the jacket are required to hold in the spring and these are easily damaged or broken off to allow loss or partial displacement of the spring relative to the jacket, with consequent adverse effects on sealing properties. Similarly, where square type or rectangular type spring elements are employed, the sharp corners are unduly stressed since all the bending occurs at the corners, and such corners tend to snap or become fatigued.

A number of configurations are known in which the spring is circular in shape, but the circular spring shape provides very little resilient force. In consequence, the product manufacturer who is to use the seal is required to manufacture a part in which separated but facing surfaces have very precise spacing tolerances, substantially increasing his costs. A concomitant factor is that, because of the limited resilience, static seals that fit a given spacing must be of different size than dynamic seals used for the same spacing.

The special shape of the invention disclosed in my above patent minimizes some of these problems, but on the other hand is a more complex configuration that requires a special jacket shape. Further, none of the sprung seals previously known permits incorporation of an internal O-ring, which is sometimes desirable in practical applications, as a substitute for the metal spring. Also, many sprung seals require a different configuration for a static application as opposed to a dynamic application.

French Patent Specification No. 2247934 describes a seal comprising an elastomeric jacket having a pair of arms extending from one side of a base portion of the jacket to form a cavity, and a resilient member located within the cavity to urge the arms outwardly, the resilient member being a spring substantially C-shaped in cross-section with a first radius of curvature extending along each arm from a base region of the spring to a point of maximum width of the spring and a second radius of curvature, smaller than the first radius of curvature, extending from the point of maximum width to a tip of the spring.

The present invention is characterized in that the arms of the jacket are curved and extend from the base with a first long radius of curvature to a point of maximum width of the jacket beyond which the arms have tip portions of smaller radius of curvature, and the arms have inner surfaces conforming to the first and second radii of curvature of the spring to retain the spring securely within the cavity.

In a seal in accordance with the invention which will be described in more detail below, the major portion of the length of the spring follows a relatively shallow curvature between the base and a position along the cross section at which the spring is widest, forming a pair of opposed cantilever arms which provide the major sealing force. From this region of greatest width to the tips of the spring, the curvature is substantially sharper, enabling the end of the spring to fit in fixed locked position within the jacket which conforms to it. At the base of the C-shaped spring, the curvature is also sharper than it is in the long cantilever arm portions. Thus, the spring has at least two different curvatures, and preferably three different curvatures, or radii of curvature, in its cross-sectional shape.

The spring receiving interior concavity in the jacket is complementary in nature to the shape of the spring, and has an open side. In consequence the spring is readily inserted into the jacket through its open side, although the inwardly angled tips of the spring prevent its release even if the edge of the jacket might be damaged. Furthermore, the spring serves as a resilient seal throughout compression until the spring tips come together. This enables one spring seal of a given width to be used within a gap of substantially different dimensions, freeing sprung seal users from the requirement for high precision in their own products.

In addition, the spring can be extracted and an O-ring can be inserted within the C-shaped cavity of the jacket to provide a sealing effect where pressure and temperature requirements permit. Further, the sprung seal of the invention is equally effective for both static and dynamic applications.

The spring element is an elongated member of substantially constant C-shaped outline or cross-section as described above, having a sinuous longitudinal configuration defined by interdigitated notches extending inwardly from opposite sides of the spring, so that the elongated spring strip has resilience along its length.

A specific embodiment will now be described by way of example with reference to the accompanying drawings in which:

Figure 1 is a cross sectional view of a mechanical sprung seal according to the invention comprising an outer jacket containing a spring element of C-shaped configuration in a cavity within the jacket;

Figure 2 is a perspective view of the spring element of Figure 1;

Figure 3 shows a spring strip used to form a spring of a type shown in Figure 2;

Figure 4 is a cross sectional view of the jacket of the mechanical sprung seal of Figure 1;

Figure 5 shows a cutting tool for forming the cavity in the jacket of Figure 4;

Figure 5a illustrates the method of forming the cavity in the jacket of Figure 4, utilising the cutting tool of Figure 5;

Figure 6 is a sectional view of the mechanical sprung seal of Figure 1 in sealing engagement between two opposing surfaces;

Figure 7 shows the spring of Figure 2 in circular form; and

Figure 8 shows a modification employing an O-ring in the jacket instead of the spring element of Figure 1.

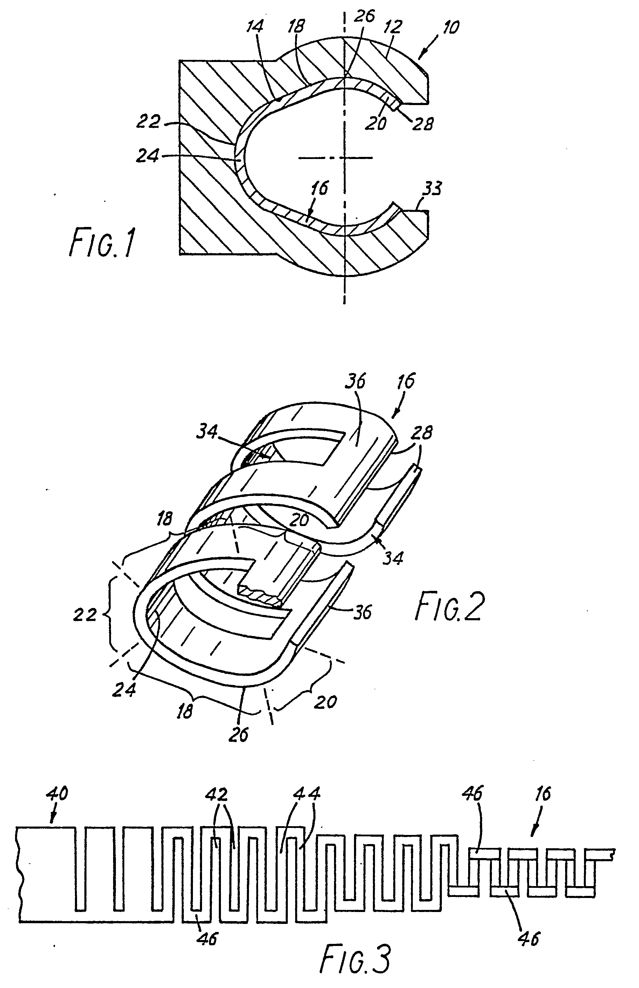

Figure 1 shows an advantageous form of mechanical seal 10 according to the invention consisting of the combination of a jacket or cover 12 formed of an elastomeric sealing material, such as Nylon or Teflon, having a C-shaped cross section or outline, and an interior cavity 14, and a metallic spring 16 of C-shaped cross section conforming to and seated within the cavity 14 of the jacket.

As seen in Figure 2, the spring element 16 in its preferred form has three different curvatures, at 18, 20 and 22. The opposite portions of the spring between the base 24 and the region of greatest width 26 of the spring 16 on each side of the spring have a relatively large radius of curvature. In effect the spring portions on opposite sides thereof form cantilever arms 18 to hold the spring in position within the jacket 12 by the constricting action of the jacket against the cantilever arms 18.

The second surfaces of curvature formed by tip portions 20 on opposite sides of the spring are terminal portions extending from the region of greatest width 26 of the spring 16 on opposite sides thereof to the tips 28 of the spring 16. These surfaces have a smaller radius of curvature than the cantilever arm portions 18. This enables the spring to be well locked in the jacket by contact of the outer tip portions 20 of the spring 16 with the inner surfaces 30 of the jacket, adjacent the open side of the jacket 12. In this respect it is noted that the tips 28 of the spring 16 terminate at the tips 33 of the jacket 12, adjacent the open side thereof.

The third surface of curvature 22 of the spring 16 has a smaller radius of curvature than the tip portions 20, and serves to connect the cantilever arms or surface portions 18 together, forming the base 24.

In order to provide sealing along an elongated junction, an elongated spring strip as shown in Figure 2 is provided having a sinuous longitudinal configuration with a plurality of spaced notches or slots 34 cut into the spring from opposite sides. The slots 34 accordingly protrude alternately from opposite sides of the spring to connectors 36 which hold the adjacent cantilever arms 18 together.

Referring to Figure 3, where an elongated spring is employed, the strip, indicated at 40, is first punched with lateral slots 42 to form a plurality of lateral arms 44 alternately connected through end members 46. The spring is then shaped employing a die to provide the final longitudinal configuration of the spring having the above described C-shaped or crescent cross-section. The resulting spring element 16 has a compliance along its length, as well as being compressible at the cantilever arms 18.

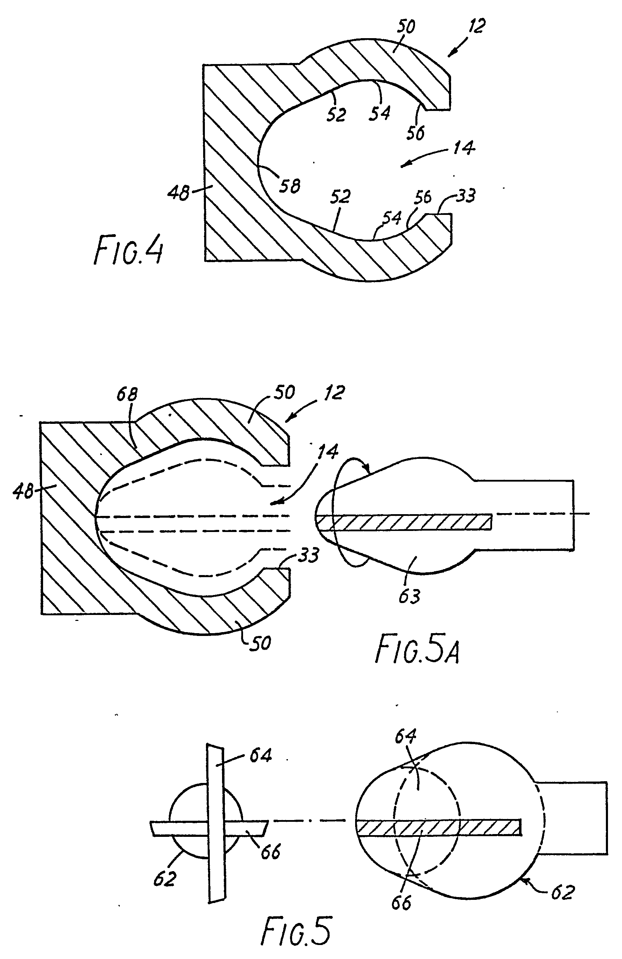

As best shown in Figure 4, the jacket 12, e.g. formed of a material such as Teflon, has a base 48 and curved side arms 50 defining a generally C-shaped interior cross-section. The side arms 50 of the jacket extend from the base along an arc having a first long radius of curvature and an inner surface 52 substantially conforming to the outer surface of the cantilever arms 18 of the spring when seated within the jacket. The first radius of curvature of the arms 50 extends to a point 54 at which the jacket has a maximum selected width. The tip portions 56 extending from the region of maximum width of the jacket have a smaller radius of curvature than the radius of curvature of the arms at 52, and the rear portions 58 connecting the arms 50 to the base 48 also have a smaller radius of curvature than the radius of curvature of the arms at 52.

The metallic spring 16 of C-shaped cross-sectional configuration conforms to the C-shaped cavity 14 in the jacket, and is registrable with the cavity for seating therein.

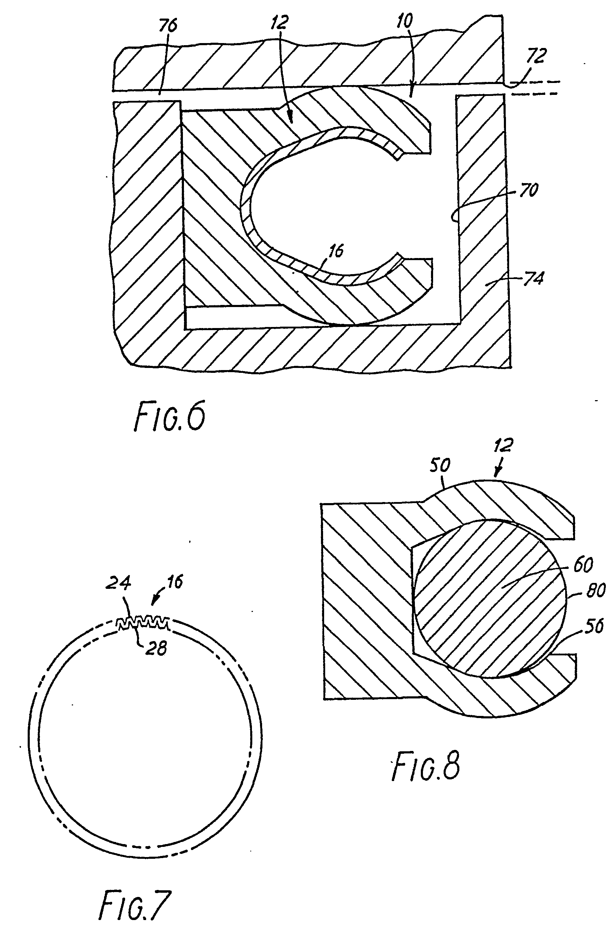

As shown in Figure 5, the jacket 12 is formed by a forming tool 62 having cutting edges 64 and 66 thereon, having a shape corresponding to the internal C-shaped cavity 14 to be formed in the jacket. As illustrated in Figure 5a, the cutting tool 62 cuts into a solid body of Teflon at 68 having an outer shape corresponding to the outer shape of the jacket. As the cutting tool cuts into the jacket material, it first forms the opening and as the cutting tool moves forward into the body of Teflon 68, it forms the cavity 14 and the C-shaped cross-sectional configuration of the jacket, as described above.

Referring now to Figure 6, according to one embodiment, the mechanical sprung seal 10 of the invention, comprising the jacket 12 and C-shaped spring 16 seated therein, can be inserted in a groove 70 functioning as a gland between two opposing surfaces 72 and 74. The groove 70 receives the mechanical sprung seal 10, which prevents movement of fluid through the passage 76, thus providing a sealed joint wherein the jacket 12 functions as the seal, with its resilient memory provided by the spring 16.

When the mechanical sprung seal of the invention is in elongated form, as shown in Figure 3, the spring 16 can be used in a circular loop form, as shown in Figure 7, with the tips 28 of the cantilever arms 18 facing radially inwardly for inside diameter sealing, the jacket in which such a spring is inserted, also being of circular shape. Alternatively, the circular spring 16 can be formed with the tips of the cantilever arms 18 facing radially outwardly for outside diameter sealing, or the spring 16 can be in circular form with the tips of the cantilever arms 18 facing out of the paper for lateral diameter sealing.

Instead of inserting a spring 16 having a C-shaped cross-section within the jacket 12, it is possible, as seen in Figure 8, to replace the spring by an O-ring 80 inserted and seated within the cavity 60 of the jacket 12 of C-shaped cross-section. The O-ring 80 is prevented from being displaced from within the jacket cavity by the outwardly curved opposed tip portions 56 of the jacket arms 50. The O-ring 80 functions as a spring and expander to provide the required spring force in the outward direction against the jacket arms 50. Such O-rings can be either metallic or of an elastomeric composition.

The mechanical seal spring of the invention can be employed for both static and dynamic applications. Thus, the mechanical spring seal of the invention can be employed, for example, as shaft seals, piston seals, and flange seals, and for both low and high pressure applications.

From the foregoing, it is apparent that the mechanical sprung seal of the invention comprises a combination of a spring element and cover or jacket, wherein the spring element and the cooperating jacket are of readily fabricated, generally C-shaped, cross-sectional configurations. The jacket and the spring are designed so that when the spring element is inserted into the jacket the forward ends or tips of the cantilever arms are substantially coextensive with the outer tips of the jacket arms, thus locking the spring within the cavity of the jacket and preventing any relative motion between the spring element and the jacket. A smooth loading surface is maintained by the outward spring action of the cantilever arms of the spring against the arms of the jacket. The jacket can be machined to fit snugly into cooperative mating relationship with the entire outside surface of the spring, thus further preventing displacement between the spring and the inner surface of the jacket. In addition, if the edge of the jacket, at the tips thereof, become damaged, the inwardly angled tips of the spring will prevent release or displacement of the spring from within the jacket.

The mechanical sprung seals of the invention can be made in varying sizes. A feature of the invention device is that since the spring serves as a resilient seal throughout compression of the spring, a spring of a given width can be employed within the jacket cavities of a range of different dimensions. This avoids the necessity for high precision in the manufacture of the springs.

Various types of jacket materials can be employed, including in addition to Nylon and Teflon, Kel-F (polymers of chlorotrifluoroethylene), FEP (fluorinated ethylene propylene resin), Kynar (polyvinylidene fluoride), polyimides and filled fluorocarbon materials. Other material can also be employed. The durability of the jacket is enhanced by the constant pressure being exerted on the sealing surfaces by the spring element, even though the elastomers may become hardened and embrittled as a result of operation.

## Claims

1. A seal comprising an elastomeric jacket (12) having a pair of arms (50) extending from one side of a base portion (48) of the jacket (12) to form a cavity (14), and a resilient member (16, 80) located within the cavity (14) to urge the arms (50) outwardly, the resilient member being a spring (16) substantially C-shaped in cross-section with a first radius of curvature (18) extending along each arm from a base region (22) of the spring to a point of maximum width (26) of the spring (16) and a second radius of curvature (20), smaller than the first radius of curvature, extending from the point of maximum width (26) to a tip (28) of the spring (16) characterized in that the arms (50) of the jacket (12) are curved and extend from the base (48) with a first long radius of curvature to a point (54) of maximum width of the jacket beyond which the arms (50) have tip portions (56) of smaller radius of curvature, and the arms (50) have inner surfaces (52, 56) conforming to the first and second radii of curvature of the spring to retain the spring securely within the cavity.

2. A seal as claimed in claim 1 characterized in that the base (58) of the cavity (14) in the jacket (12) conforms to a base region (22) of the spring having a third radius of curvature which is smaller than the first radius of curvature.

3. A seal as claimed in claim 2 characterized in that the third radius of curvature is smaller than the second radius of curvature.

4. A seal as claimed in claim 2 or 3 characterised in that lateral slots (34) are cut alternately from the arms (18) of the spring (16), the slots (34) extending from the tip (28) of the arm (18) through the base region (22) of the spring (16) and into the opposite arm (18).

## Patentansprüche

1. Dichtung mit elastomerer Ummantelung (12), welche ein Paar sich von einer Seite eines Sockelabschnittes (48) der Ummantelung (12) erstreckender und einen Hohlraum (14) bildendender Arme (50) aufweist, und mit einem in dem Hohlraum (14) untergebrachten, die Arme (50) auswärts zwingenden federnden Element (16, 80), wobei das federnde Element eine im Querschnitt C-förmige Feder (16) mit einem ersten Krümmungsradius (18), der sich entlang jedes Armes von einem Basisbereich (22) der Feder zu einem Punkt maximaler Weite (26) der Feder (16) erstreckt, und mit einem zweiten Krümmungsradius (20), kleiner als der erste Krümmungsradius, der sich von dem Punkt maximaler Weite (26) zum äußersten Ende (28) der Feder (16) erstreckt, ist, dadurch gekennzeichnet, daß die Arme (50) der Ummantelung (12) gekrümmt sind und sich vom Sockel (48) mit einem ersten großen Krümmungsradius zu einem Punkt (54) maximaler Weite der Ummantelung, über den hinaus die Arme (50) Endstücke (56) mit kleinerem Krümmungsradius aufweisen, erstrecken und daß die Arme (50) an die ersten und zweiten Krümmungsradien der Feder angepaßte Innenflächen (52, 56) zum sicheren Halten der Feder im Hohlraum aufweisen.

2. Dichtung nach Anspruch 1, dadurch gekennzeichnet, daß der Sockel (48) des Hohlraums (14) in der Ummantelung (12) einem Basisbereich (22) der Feder mit einem dritten Krümmungsradius, welcher kleiner ist als der erste Krümmungsradius, angepaßt ist.

3. Dichtung nach Anspruch 2, dadurch gekennzeichnet, daß der dritte Krümmungsradius kleiner als der zweite Krümmungsradius ist.

4. Dichtung nach Anspruch 2 oder 3, dadurch gekennzeichnet, daß wechselweise von den Armen (18) der Feder (16) her Seitenschlitze (34) geschnitten sind, wobei die Schlitze (34) sich von der Außenkante (28) des Arms (18) durch den Basisbereich (22) der Feder (16) in den anderen Arm (18) erstrecken.

**Revendications**

1. Un joint d'étanchéité comprenant une garniture en élastomère (12) ayant une paire de branches (50) qui s'étendent à partir d'un côté d'une partie de base (48) de la garniture (12), pour former une cavité (14), et un élément élastique (16, 80) qui est logé à l'intérieur de la cavité (14) pour solliciter les branches (50) vers l'extérieur, cet élément élastique consistant en un ressort (16) dont la section transversale a sensiblement une forme en C, avec un premier rayon de courbure (18) dans une partie s'étendant le long de chaque branche, depuis une région de base (22) du ressort jusqu'à un point de largeur maximale (26) du ressort (16), et un second rayon de courbure (20), inférieur au premier rayon de courbure, dans une partie s'étendant depuis le point de largeur maximale (26) jusqu'à une extrémité libre (28) du ressort (16), caractérisé en ce que les branches (50) de la garniture (12) sont courbées et s'étendent à partir de la base (48) avec un premier rayon de courbure de valeur élevée, jusqu'à un point (54) de largeur maximale de la garniture, au-delà duquel les branches (50) présentent des parties d'extrémités libres (56) ayant un plus faible rayon de courbure, et les branches (50) comportent des surfaces intérieures (52, 56) qui se conforment aux premier et second rayons de courbure du ressort, pour retenir le ressort de façon sûre à l'intérieur de la cavité.

2. Un joint d'étanchéité selon la revendication 1, caractérisé en ce que la base (58) de la cavité (14) dans la garniture (12) se conforme à une région de base (22) du ressort, ayant un troisième rayon de courbure qui est inférieur au premier rayon de courbure.

3. Un joint d'étanchéité selon la revendication 2, caractérisé en ce que le troisième rayon de courbure est inférieur au second rayon de courbure.

4. Un joint d'étanchéité selon la revendication 2 ou 3, caractérisé en ce que des encoches latérales (34) sont découpées alternativement dans les branches (18) du ressort (16), ces encoches (34) s'étendant depuis l'extrémité libre (28) de la branche (18), en traversant la région de base (22) du ressort (16) et en pénétrant dans la branche opposée (18).

*FIG.1*

*FIG.2*

*FIG.3*

1

FIG.4

FIG.5A

FIG.5

FIG.6

FIG.7

FIG.8